# EUROPEAN PATENT SPECIFICATION

(11) **EP 1 657 952 B1**
(45) Date of publication and mention of the grant of the patent: **02.07.2008**
(21) Application number: 04026929.2
(22) Date of filing: 12.11.2004
(51) Int. Cl.: H04Q 11/00

(54) **A ring network for a burst switching network with distributed management**
Ein Ringnetz für ein Burst-geschaltetes Netz mit verteiltem Management
Réseau en anneau pour un réseau de commutation par rafales avec management distribué

(43) Date of publication of application: 17.05.2006
(73) Proprietor: Nokia Siemens Networks GmbH & Co. KG, 81541 München (DE)
(72) Inventor: De Vega Rodrigo, Miguel, 1200 Woluwe St. Lambert Brussels (BE)

(56) References cited:
- US-A1- 2002 059 408
- US-A1- 2002 146 007
- US-A1- 2003 206 521
- QIAO C: "LABELED OPTICAL BURST SWITCHING FOR IP-OVER-WDM INTEGRATION" IEEE COMMUNICATIONS MAGAZINE, IEEE SERVICE CENTER. PISCATAWAY, N.J, US, vol. 38, no. 9, September 2000 (2000-09), pages 104-114, XP000975327 ISSN: 0163-6804

## Description

The present invention relates to transmitting data in a ring in a network as a combination of reserved bandwidth bursts and IP packets that are sent on-the-fly and, more particularly, to an Adaptive Burst Switching Optical Network (APSON).

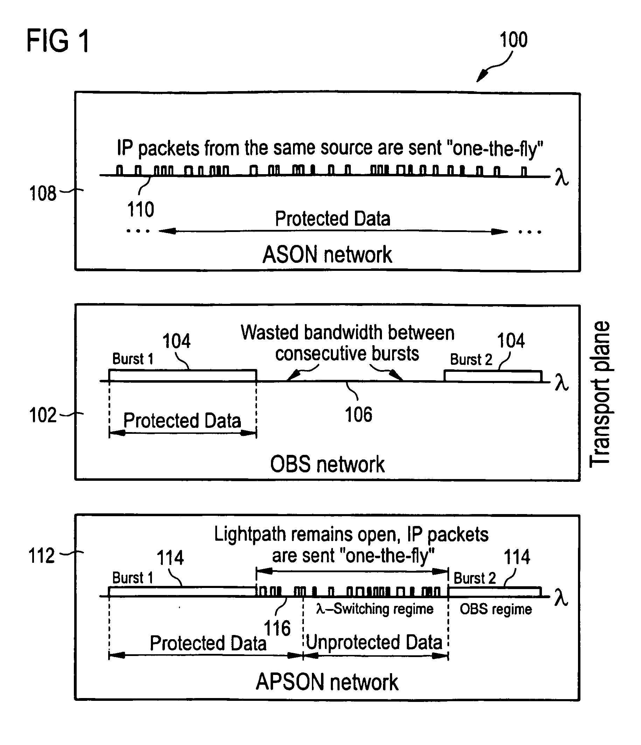

APSON may be thought of as a hybrid network technology between Optical Burst Switching (OBS) and ASON (Automatic Switched Optical Networks). This will be appreciated from Figure 1 which shows the three transport networks 100 side-by-side.

In OBS networks 102, the bandwidth 104 associated to this path is reserved as long as the path is not torn down, which basically means that these bandwidth resources are not available to other sources. In other words, the transmitted data is protected as long as the path exists.

It is important to note, however, that in OBS networks, only the bandwidth equivalent to the duration of the burst is reserved. If another burst wishes to be transferred before this protected data time gap is over, i.e., before the current burst has been transmitted, it will be blocked. In addition, in OBS networks no information can be sent between bursts as shown by the wasted bandwidth section 106.

In ASON (108, Figure 1), data is sent as it arrives, i.e., "on-the-fly" through an established path. The data is normally IP packets 110 and the bandwidth is not reserved. Naturally, this means that ASON is more flexible than OBS, which makes it easier to implement Quality of Service (QoS) rules for treating different customers differently. On the other hand, ASON is not structured and is more difficult to control than OBS.

In APSON 112, the duration of the reserved bandwidth 114, i.e., the duration of the protected data, is detached from the duration of a burst transmission 116. In other words, the APSON scheme is both a λ-switching regime and an unprotected data time gap, wherein the bursts are transmitted under a protected transmission while the IP packets that are sent on-the-fly are transmitted, either protected or unprotected, in the λ-switching. This allows for more flexibility when implementing different quality of service (QoS) to different customers based on, for example, customer plans.

There are similarities between APSON and these previous networks, however, APSON is really a unique network scheme. Prior to the creation of a new lightpath, for example, packets are collected in an aggregation buffer. This is somewhat similar to OBS networks. Some other concepts were borrowed from OBS networks as well, such as the OBS bandwidth reservation scheme. However, APSON is distinctly different than OBS. Most significantly, APSON effectuates a circuit switching philosophy similar to ASON, whilst OBS networks use a packet switching approach. Thus, APSON, while a hybrid of the two network philosophies, is a completely different type of network.

Because APSON is a brand new switching scheme, it has not yet been discussed in the field how to provide a ring topology for APSON. However, it would be advantageous to provide a ring topology to APSON because rings are simple to implement and, for this reason, have historically played an important role in optical networks. For instance, routing, switching and network management tasks are considerably less complex in ring topologies in comparison to meshed topologies. For this reason, rings would be a highly desirable topology for deploying new optical network technologies such as APSON.

The invention aims at providing the basic concepts for the deployment of a simple, yet, highly efficient APSON. In providing a viable distributed approach, special consideration is given to the current technological limitations at the optical layer, such, for example, the switching speed.

Ring topologies have been widely studied in λ-switching networks. More recently, OBS ring networks have re-awakened the interest of the research community and this has resulted in many more-recent studies investigating the performance of rings in light of λ-switching networks. Studies, such as A. Zapata, I. de Miguel, M. Düser, J. Spencer, P. Bayvel, D. Breuer, N. Hanik, and A. Gladisch. Performance comparison of static and dynamic optical metro ring network architectures. *Proceedings ECOC 2003*, have suggested that the most promising architecture in terms of delay, network throughput and the number of wavelengths needed is not OBS but, rather, a variant of OBS called Wavelength Routed OBS networks (WR-OBS). Apparently, the difference is that the source in OBS networks sends a header packet and, after waiting an offset time, sends the burst as well. In WR-OBS networks, by contrast, the source sends a header packet but it waits for an acknowledgement from the network before sending the burst.

The fact that "Zapata" and similar studies point out that WR-OBS networks are the most promising architecture for optical ring networks is hopeful news for APSON. APSON uses a similar acknowledgement-based variant of OBS signalling in order to setup a lightpath. However, it is not yet known for certain whether a ring topology would be as advantageous for APSON. Nor is it certain or defined how a ring topology would be applied for APSON.

To date, there has been no concept for a distributed APSON ring defined. However, encouraging studies such as Zapata's is motivating. It would, therefore, be advantageous to find a viable and efficient APSON-based ring solution. Such a solution should, in theory, have even better results than in the ring WR-OBS architecture since APSON has advantages in comparison to OBS-based solutions like WR-OBS networks.

For one thing, an APSON ring topology would be able to reuse the standardized ASON control plane. Moreover, an APSON ring would be easier and quicker to deploy due to fewer technological challenges. An APSON ring would also offer less delay, higher throughput, lower signalling overhead and self-organizing architecture.

APSON-based rings present advantages also in comparison to λ-switching approaches. In a pure all-optical λ-switching rings with *N* nodes, each node requires a channel in order to receive data from the rest of the nodes. Therefore, a total of *M* = *N* - *1* channels are needed. Due to the fact that APSON presents time multiplexing of bandwidth resources, the number of wavelengths needed will be reduced compared to the λ-switching case.

To explain a channel would represent a wavelength in one of the fibers. But, it must be remembered that a channel is a concept at the logical layer. With λ-conversion capabilities the number of wavelengths *W* needed is *W* = *M.* In our discussion λ-conversion is not available so the number of wavelengths needed is *W* = *M* + *1* = *N*, be it in a mono- or multimode fiber.

In APSON, the multiplexing clearly reduces the number of wavelengths needed dramatically. Moreover, there is always a number of optical components associated with each wavelength. Some of these optical components, such as tunable lasers, are quite expensive. Therefore, the reduction in the number of wavelengths needed has a great impact on cost, which is a main motivation for the invention to propose and research the effectiveness of APSON rings. Heretofore, there has been no application of a ring topology to APSON.

However, the motivation to develop an APSON ring topology belies the following problem. Presently, commercially available switching fabrics offer switching speeds usually in the order of milliseconds. This leads to path setup times in the order of seconds, sometimes longer, which is clearly not fast enough for a truly dynamic switching architecture with link capacities in the order of Gbps. With the current switching speeds, every time a new path setup takes place, a non-negligible amount of bandwidth is wasted. This increases the blocking probability, which leads to the need of a higher number of wavelengths and their associated expensive optical hardware, such as tunable lasers. Therefore, the slower the switching fabric and the higher the number of path setups per unit of time the higher the costs in optical hardware. This presents at least one major obstacle to be overcome in order to implement dynamic switching architectures such as ASON, APSON or, for that matter, OBS.

An US Patent Application US 2003/0206521 A1 discoses a method to route and re.route data in OBS/LOBS and other burst switched networks. The application describes (well known) ways to format and assemle bursts, route them, make bandwidth reservation, and for failure recovery, processing burst control packets etc. In addition it focuses on a hybrid priority concept, how packets of different priority are assembled in a burst.

Of course, it does not describe a method or arrangement according to the brand new APSON switching scheme and the adaption of this scheme to a ring network with distributed management.

### SUMMARY OF THE INVENTION

In order to reduce hardware costs either faster low-cost switching fabric should be produced or an optical solution that reduces the number of switching actions per unit of time should be used. The first possibility is at present an unlikely solution given the limitations in current technology. The invention focuses on the second alternative to provide a viable ring topology solution for APSON.

The present invention provides a feasible centralized APSON ring with present-day optical components without sacrificing high network performance and a corresponding method for data transmission.

The concept is to design a distributed APSON ring that is feasible with present day optical components without renouncing to high network performance.

It shall be appreciated that the use of APSON in the present invention reduces to zero, or substantially zero, or otherwise reducing, the number of switching actions per unit of time inside the ring network.

A problem is solved by a method for transmitting data in a burst switching ring network with a plurality of nodes and distributed management with the features: the data is transmitted by the nodes as bursts or data packets containing protected data during a reserved time for which bandwidth has been reserved, and data packets containing unprotected data after the reserved time, a source node sending a path setup message, to request a data transmission between said source node and a destination node through intermediate nodes for connecting the source node and the destination node, determining by each intermediate node that a connection to a next node along the path is available,
sending back a positive acknowledgement by the destination node if the path is available, and determining that the path is available for new data transmission when ongoing data transmission on the path is unprotected, stopping a current data transmission of data packets containing unprotected data on the path when the path or channel respectively is determined to be available for new data transmission.

Another problem is solved by a burst switching ring network with a plurality of nodes and distributed management transmitting data, comprising, one or more channels coupling the nodes for transmitting the data between a source node and a destination node,the nodes being designed for sending bursts or data packets containing protected data during a reserved time for which bandwidth has been reserved, and sending data packets containing unprotected data after the reserved time, the source node designed to request a data transmission to be set up to the destination node through intermediate nodes, the nodes designed for determining that a connection to a next node along the path is available, and for determining that the path is available when the data transmission on the path is unprotected, the destination node designed for determining that the path is available and sending back a positive acknowledgement if the path is available, and for stopping a current data transmission of data packets containing unprotected data on the path when the path or channel respectively is determined to be available for new data transmission.

In one aspect, and in order to reduce costs and to make the concept feasible with the optical technologies of today, no λ-conversion capabilities inside the ring network will be used.

In another aspect, and in order to reduce costs and to make the concept feasible with the optical technologies of today, no dynamic switching inside the ring network will be used.

### BRIEF DESCRIPTION OF THE DRAWINGS

The drawings illustrate at least one example of the invention, wherein:
Figure 1 shows various transport schemes;
Figure 2 shows a schematic diagram of the present invention; and
Figure 3 shows the present invention in terms of functional description.

### DETAILED DESCRIPTION OF THE PREFERRED EMBODIMENTS

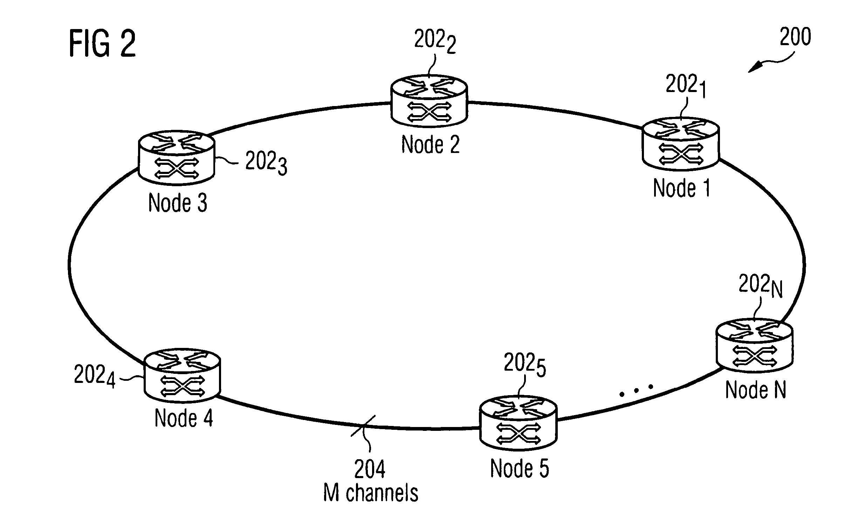

A distributed ring architecture 200 will now be discussed with reference to Figure 2. In the figure, there is shown N nodes 202₁ - 202_{N} (= NODE 1 - Node N) and M channels 204. As opposed to a centralized network, where a core or control node controls data flow, the distributed network of Figure 2 provides distributed or shared network control amongst the various nodes 202₁ - 202_{N}.

In a centralized network, in order to schedule message flows the core node generates a path setup message indicating in a special field the length for which bandwidth will be reserved. The network or the central control node guarantees that if a positive acknowledgement to the path setup message is granted, no other node can interrupt the data transmission during this reserved time. Data transferred during the time for which bandwidth has been reserved is called protected data. Data transferred after the protected data has been sent is called unprotected data. No bandwidth has been reserved for unprotected data and therefore other sources can interrupt its transmission. A data flow comprises the transmission of the protected data plus possibly the transmission of unprotected data.

In the present invention, there is provided a distributed ring architecture 200 with nodes 202₁- 202_{N} in M channels 204. There are no core nodes. The present invention applies particularly to a type of network that transmits both bursts, i.e., data packets during reserved bandwidth, and data packets on-the-fly. In particular, the present invention pertains to the already-described APSON.

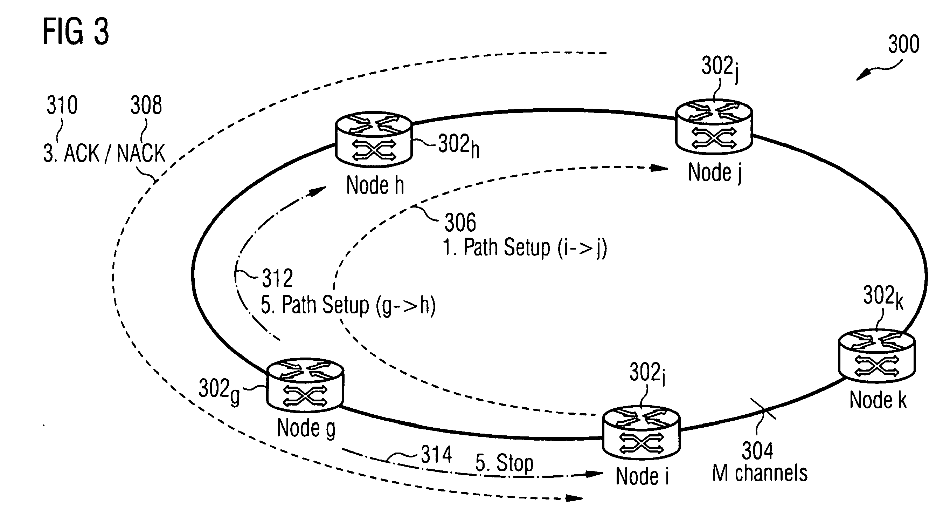

In order to better understand the distributed APSON according to the present invention, the functional description of the distributed ring APSON shall be described with reference to the distributed ring architecture 300 shown in Figure 3. As in the previous figure, N nodes 302_{g} - 302ₖ (Node g - Node k) are coupled to each other through M channels 304.

In summary, when a transmission is desired to be made between a source node 302ᵢ and a destination node 302ⱼ, for example, a path setup message is forwarded by each of the intermediate nodes along the selected path. In each instance, the intermediate node receiving the message determines whether the channel along the path that is to transmit data from the source node 302ᵢ to the destination node 302ⱼ is available to that particular intermediate node. Unlike in a centralized network, it is the intermediate nodes that have access to the information of the connectivity of the channels coupled to them and it is the intermediate nodes that determine and decide that the path is available, i.e., unprotected.

In the case that the channel coupled to the intermediate node is available, the intermediate node, in this example, modifies the path setup message to indicate that the channel coupled to that intermediate is available and forwards the path setup message to the next intermediary node in the path. This process continues until the destination node 302ⱼ receives the path setup message.

It should be noted that, in this embodiment, only the destination node 302ⱼ knows that the selected path is available. It is the destination node j 202ⱼ, that receives the path setup message from the last intermediate node. At this time, the destination node 302ⱼ then proceeds to set up the channel. Another way to describe the situation is that the path is not set up until the destination node 302ⱼ receives the path setup message, because it is not until the last intermediary node forwards the path setup message to the destination node 302ⱼ that the channel is available.

Since APSON provides time multiplexing of the wavelength capacities normally, the number of channels will be below the number of nodes (*M*≤*N*) in the present invention. This is a major advantage in comparison to λ-switching networks.
Without λ-conversion an APSON data flow (composed by a burst plus possibly IP packets) uses the same wavelength along its path. Thus, minimizing the number of channels needed.

It should be pointed out that, without dynamic switching, an APSON data flow uses the same fixed combination of fibers along its path. This means at the logical layer (see figure 1) that the APSON data flow once in channel x does not switch to another channel y (with x≠*y*). If multimode fibers are being used, a channel represents a wavelength in one of these fibers. If monomode fibers are being used, a channel directly represents one of these fibers.

In order for node 302ᵢ to send a data flow to node 302ⱼ, the following steps are carried out. Preferably, the steps are carried out in the order set forth, but may be arranged in another order.

In normal switching operation, each node 302_{g} - 302ₖ receives incoming IP packets, sorts them according to their destination and collects them in different buffers, each one for each destination. In order to set up a connection, node 302ᵢ sends a *path setup* message 306 to destination node 302ⱼ.

This may be done whenever a predetermined algorithm, such as an "aggregation strategy", decides that enough packets for destination 302ⱼ have been collected in the correspondent buffer.

The path setup message 306, in the preferred embodiment, includes a Source field, a Destination field, a Duration field and a Channel field. The Duration field indicates the duration of the protected data for which bandwidth will be reserved. The *channel field* indicates the channel on which the source wishes to send the data flow. The Source and Destination fields designate the source and destination nodes.

In a second step, each intermediate node along the path from source 302ᵢ to destination node 302ⱼ reads the *path setup* message 306 and checks for the availability of the channel specified in the *channel field.* If the channel is not available, the intermediate node sends a *NACK* (not acknowledge) message 308 back to the source node 302ᵢ indicating that the data flow cannot be accommodated.

The intermediate node copies, in a special field of the *NACK* message 308 called the *channel field,* the number of the channel specified in the *channel field* of the *path setup* message 306. Each intermediate node receiving a *NACK* message 308 changes the status of the channel specified in the *channel field* to unavailable.

Otherwise the intermediate node forwards the *path setup* message 306 to the next node along the path of the data flow and changes the status of the channel specified in the channel field of the *path setup* message 306 to *available.*

In a third step, if all of the intermediate nodes can accommodate the data flow from source node 302ᵢ, the *path setup* message 306 eventually arrives at the destination node. In this case, the destination node 302ⱼ sends an *ACK* (acknowledge) message 210 back to the source node 302ᵢ indicating that the data flow can be transferred.

In a fourth step, when the source node 302ᵢ receives a *NACK* message 308 it may perform one of the following operations according to the particular implementation of the decentralized APSON ring architecture. First, it may discard the data flow. For example, all of the packets may be discarded in the edge node buffer. Second, a data flow transmission may be reattempted after a certain time *tₐₜₜₑₘₚ* on a certain channel λ. This time may be zero, constant, random or chosen according to a certain algorithm. The channel λ may be the same as before or a different one chosen according to a certain algorithm. When the source node 302ᵢ receives an *ACK* message 210, it transfers the data flow.

In a fifth step, when another source wishes to send a data flow on the same channel through partially or totally the same end-to-end path as the ongoing data flow transmission from node 302ᵢ to 302ⱼ, it sends a new *path setup* message to the destination node.

In the situation that an ongoing data flow is currently sending data packets on-the-fly, in other words, as *unprotected data*, the channel is determined to be available and the ongoing data flow is interrupted.

Two cases should be distinguished in this case. The first is when a new source 302ₖ sends a new data flow through the source node 302ᵢ of the ongoing data flow, as in Figure 3. The second is when the source 302ᵢ of the ongoing data flow sends the old data flow i->j through a new source 302_{g} of a new data flow 312 g->h (shown in FIG 3).

In the first case, node 302ᵢ automatically stops sending the ongoing data flow when it receives the *path setup* from node 302ₖ. In the second case, node 302_{g} sends a stop message 314 back to the source of the ongoing data flow (node *i*). When node 302ᵢ receives a stop message 314 it automatically stops sending the ongoing data flow. In the case that the ongoing data flow is currently sending *protected data*, the channel is determined to be unavailable and the ongoing data flow is not interrupted.

In another version of the invention, the invention implements λ-conversion-capable optical components. In this case, the *path setup* message is not provided with a *channel field.* Instead, each intermediate node checks if there is *any* available channel. This may be accomplished by providing a new parameter, *L_{available}* that is designated the list of available channels for the transmission of the data flow in the intermediate node. If *L_{available}* has more than one element, the intermediate node(s) selects one of the channels according to a certain criteria. The selected channel is declared as *unavailable* and the *path setup* message is forwarded. The remainder of the procedure is similar to the previously-described case.

In another variant of the invention, the *path setup* message includes an extra field called the *Channel Pool* field. The source node provides this field with the list of all possible channels through which it could send the data flow. Each intermediate node eliminates from this list the channels that are not available. However it declares as *unavailable* only the channel specified in the *channel field* of the *path setup* message similar to the above case.

In this version each intermediate node forwards the *path setup* message even if the channel specified in the *channel field* is not available. In this case the intermediate node changes the value of the *channel field* to, for instance, -1, in order to inform the destination node that some intermediate nodes cannot accommodate the data flow in the specified channel. If the destination node receives a *path setup* message with the *channel field* intact, then it returns an *ACK* to the source signalling that it might begin the flow transmission.

On the other hand, if the *channel field* contains a value, such as -1, the destination node checks the *channel pool field.* If this field is not empty, then the destination node selects one channel from it according to a certain criteria and returns a *NACK* message to the source with an additional field, herein referred to as the *Proposed Channel,* containing the selected channel. Each intermediate node receiving a *NACK* message declares as *available* the channel specified in the *channel field* of the *NACK* message just as before. The source node receives the *NACK* message, reads the proposed channel field and returns another *path setup* with the proposed channel in the *channel field* with the hope that the proposed channel is still available. In this manner, the solution is more efficient since a *NACK* message might contain as well information regarding a channel which was at least available by the time the *NACK* message was created.

The Distributed APSON Ring concept of the present invention is advantageous. For one thing, the solution is valid for both uni- and bidirectional links. Due to the efficient wavelength time multiplexing of APSON, the number of wavelengths for a given ring topology and given offered traffic volume is reduced in comparison to WR-OBS, OBS and especially to λ-switching networks. Since each wavelength has associated several optical components, some of which are quite expensive such as the tuneable lasers, the number of wavelengths is reduced. This results in important cost savings on optical components that are no longer needed.

Again, due to the fact that APSON presents the most efficient wavelength time multiplexing in comparison to WR-OBS, OBS architectures, the inventive distributed APSON rings offer a lower delay, delay jitter that their OBS-based counterparts. For the same reason, the blocking probability in distributed APSON rings is virtually zero. The concept allows for QoS implementations, as well as an all-optical transport plane. The concept allows to implement more complex and efficient or less complex and efficient solutions depending on the needs.

With the present invention, switching can be eliminated. As a consequence of this the switching speed of the switching fabric does not play an important role anymore, which allows for a direct cost reduction. The invention, thus, does not require λ-conversion although it is valid for a case with λ-conversion. Further, a distributed APSON ring architecture presents no single point of failure (no centralized control node) unlike a centralized APSON ring approach. In addition, the present invention presents no scalability problems due to the increasing workload in a centralized control node as network increases its size unlike in a centralized APSON ring approach.

## Claims

1. A method for transmitting data in a burst switching ring network with a plurality of nodes (302_{g} - 302ₖ) and distributed management,
**characterized in that**,
the data is transmitted by the nodes (302_{g} - 302ₖ) as bursts or data packets containing protected data during a reserved time for which bandwidth has been reserved, and data packets containing unprotected data after the reserved time, a source node (302ᵢ) sending a path setup message (306), to request a data transmission between said source node (302ᵢ) and a destination node (302ⱼ) through intermediate nodes (302_{g}, 302ₕ) for connecting the source node (302ᵢ) and the destination node (302ⱼ),
determining by each intermediate node (302_{g}, 302ₕ) that a connection to a next node (302ₕ, 302ⱼ) along the path is available,
sending back a positive acknowledgement (ACK) by the destination node (302ⱼ) if the path is available, and
determining that the path is available for new data transmission (g->h) when ongoing data transmission (i->j) on the path is unprotected,
stopping a current data transmission (i->j) of data packets containing unprotected data on the path when the path or channel respectively is determined to be available for new data transmission (g->h).

2. The method according to claim 1,
further **characterized in that**,
the step of sending a stop message (314) by a node becoming a new source node (302_{g}) to an source node (302ᵢ) sending unprotected data.

3. The method according to claim 1 or 2,
further **characterized in that**,
if the path is not available, the intermediate node (302_{g}, 302ₕ) sends a not acknowledge message ((NACK, 308) to the source node (302ᵢ) indicating that the data transmission cannot be accommodated.

4. The method according to claim 3,
further **characterized in that**,
when the source node (302ᵢ) receives a not acknowledge (NACK) message (308), the source node (302ᵢ) discards the data flow.

5. The method according to one of the preceding claims,
further **characterized in that**,
when the path setup message (306) arrives at the destination node (302j), the destination node (302ⱼ) sends an acknowledge message (ACK, 310) to the source node (302ᵢ) indicating that the data flow can be transferred on a particular path.

6. The method according to one of the preceding claims 1-5,
further **characterized in that**,
the data transmission (i->j) is reattempted after a certain time (tₐₜₜₑₘₚ) on a certain channel (λ).

7. The method according to one of the preceding claims,
further **characterized in that**,
when another source node (302_{g}) wishes to send a data transmission through at least partially the same path (302_{g} to 302ₕ), the another source node (302_{g}) sends a new path setup message to its destination node (302ₕ).

8. The method according to one of the preceding claims,
further **characterized in that**,
the path setup message (312) includes a channel pool field, and the source node (302ᵢ) enters in the channel pool field a list of all possible channels through which the source node (302ᵢ) sends the data transmission.

9. A burst switching ring network with a plurality of nodes (302_{g} - 302ₖ) and distributed management transmitting data, comprising,
one or more channels (304) coupling the nodes (302_{g} - 302ₖ) for transmitting the data between a source node (302ᵢ) and a destination node (302ⱼ),
the nodes (302_{g} - 302ₖ) being designed for sending bursts or data packets containing protected data during a reserved time for which bandwidth has been reserved, and sending data packets containing unprotected data after the reserved time,
the source node (302ᵢ) designed to request a data transmission to be set up to the destination node (302ⱼ) through intermediate nodes (302_{g} - 302ₕ),
the nodes (302_{g}, 302ₕ) designed for determining that a connection to a next node (302ₕ, 302ⱼ) along the path is available, and for
determining that the path is available when the data transmission (i->j) on the path is unprotected,
the destination node (302ⱼ)designed for determining that the path is available and sending back a positive acknowledgement (ACK) if the path is available, and for
stopping a current data transmission (i->j) of data packets containing unprotected data on the path when the path or channel respectively is determined to be available for new data transmission (g->h).

10. The ring network according to claim 9,
**characterized in that**,
wherein the source node (302ᵢ) is designed to send a path setup message (306), indicating a path to set up a data transmission, to the destination node (302ⱼ).

11. The ring network according to claim 10, **characterized in that**,
each intermediate node on the path between the source node (302ᵢ) and the destination node (302ⱼ) is designed to read the path from the path setup message (306).

12. The ring network according to claim 10 or 11,
**characterized in that**,
each intermediate node on the path between the source node (302ᵢ) and the destination node (302ⱼ)is designed to determine an availability of a channel connected to the respective intermediate node and a next node on the path specified in the path setup message (306).

13. The ring network according to claim 12, further
**characterized in that**,
each intermediate node (302_{g} - 302ₕ) is designed to set a status of the channel connected to the respective intermediate node in the path setup message.

14. The ring network according to one of the preceding claims 9-13,
further **characterized in that**,
the distributed ring network implements λ-conversion-capable optical components.

## Patentansprüche

1. Verfahren zum Übertragen von Daten in einem Burst-Switching-Ringnetz mit einer Vielzahl von Knoten (302_{g}-302ₖ) und verteiltem Management,
**dadurch gekennzeichnet, daß**
die Daten durch die Knoten (302_{g}-302ₖ) während einer reservierten Zeit, für die Bandbreite reserviert worden ist, als geschützte Daten enthaltende Bursts oder Datenpakete übertragen werden und nach der reservierten Zeit als ungeschützte Daten enthaltende Datenpakete,
ein Ursprungsknoten (302ᵢ) eine Pfadeinrichtungsnachricht (306) zur Anforderung einer Datenübertragung zwischen dem Ursprungsknoten (302ᵢ) und einem Zielknoten (302ⱼ) durch Zwischenknoten (302_{g}, 302ₕ) zum Verbinden des Ursprungsknotens (302ᵢ) und des Zielknotens (302ⱼ) sendet,
Bestimmen durch jeden Zwischenknoten (302_{g}, 302ₕ), das eine Verbindung zu einem nächsten Knoten (302ₕ, 302ⱼ) entlang dem Pfad verfügbar ist,
Zurücksenden einer positiven Bestätigung (ACK) durch den Zielknoten (302ⱼ), wenn der Pfad verfügbar ist, und
Bestimmen, daß der Pfad für eine neue Datenübertragung (g->h) verfügbar ist, wenn bestehende Datenübertragung (i->j) auf dem Pfad ungeschützt ist,
Anhalten einer gegenwärtigen Datenübertragung (i->j) von ungeschützte Daten enthaltenden Datenpaketen auf dem Pfad, wenn bestimmt wird, daß der Pfad bzw. Kanal für neue Datenübertragung (g->h) verfügbar ist.

2. Verfahren nach Anspruch 1, weiterhin **gekennzeichnet durch** den Schritt des Sendens einer Haltnachricht (314) **durch** einen zu einem neuen Ursprungsknoten (302_{g}) werdenden Knoten an einen ungeschützte Daten sendenden Ursprungsknoten (302ᵢ).

3. Verfahren nach Anspruch 1 oder 2, weiterhin **dadurch gekennzeichnet, daß**, wenn der Pfad nicht verfügbar ist, der Zwischenknoten (302_{g}, 302ₕ) eine Nichtbestätigungsnachricht (NACK, 308) an den Ursprungsknoten (302ᵢ) sendet, die anzeigt, daß die Datenübertragung nicht aufgenommen werden kann.

4. Verfahren nach Anspruch 3, weiterhin **dadurch gekennzeichnet, daß**, wenn der Ursprungsknoten (302ᵢ) eine Nichtbestätigungsnachricht (NACK) (308) empfängt, der Datenfluß vom Ursprungsknoten (302ᵢ) verworfen wird.

5. Verfahren nach einem der vorhergehenden Ansprüche, weiterhin **dadurch gekennzeichnet, daß** wenn die Pfadeinrichtungsnachricht (306) am Zielknoten (302ⱼ) ankommt, der Zielknoten (302ⱼ) eine Bestätigungsnachricht (ACK, 310) zum Ursprungsknoten (302ᵢ) sendet, die anzeigt, daß der Datenfluß auf einem bestimmten Pfad übermittelt werden kann.

6. Verfahren nach einem der vorhergehenden Ansprüche 1-5, weiterhin **dadurch gekennzeichnet, daß** die Datenübertragung (i->j) nach einer gewissen Zeit (tₐₜₜₑₘₚ) auf einem gewissen Kanal (λ) wieder versucht wird.

7. Verfahren nach einem der vorhergehenden Ansprüche, weiterhin **dadurch gekennzeichnet, daß**, wenn ein anderer Ursprungsknoten (302_{g}) eine Datenübertragung über mindestens teilweise den gleichen Pfad (302_{g}-302ₕ) zu senden wünscht, der andere Ursprungsknoten (302_{g}) eine neue Pfadeinrichtungsnachricht zu seinem Zielknoten (302ₕ) sendet.

8. Verfahren nach einem der vorhergehenden Ansprüche, weiterhin **dadurch gekennzeichnet, daß** die Pfadeinrichtungsnachricht (312) ein Kanal-Pool-Feld enthält und der Ursprungsknoten (302ᵢ) in dem Kanal-Pool-Feld eine Liste aller möglichen Kanäle einträgt, über die der Ursprungsknoten (302ᵢ) die Datenübertragung sendet.

9. Burst-Switching-Ringnetz mit einer Vielzahl von Knoten (302_{g}-302ₖ) und datenübertragendem verteiltem Management, mit folgendem:
einem oder mehreren die Knoten (302_{g}-302ₖ) verkoppelnden Kanälen zum Übertragen der Daten zwischen einem Ursprungsknoten (302ᵢ) und einem Zielknoten (302ⱼ),
wobei die Knoten (302_{g}-302ₖ) zum Senden von geschützte Daten enthaltenden Bursts oder Datenpaketen während einer reservierten Zeit, für die Bandbreite reserviert worden ist, und zum Senden von ungeschützte Daten enthaltenden Datenpaketen nach der reservierten Zeit ausgelegt sind,
wobei der Ursprungsknoten (302ᵢ) zum Anfordern einer zum Zielknoten (302ⱼ) durch Zwischenknoten (302_{g}, 302ₕ) aufzubauenden Datenübertragung ausgelegt ist,
wobei die Knoten (302_{g}, 302ₕ) zum Bestimmen, daß eine Verbindung zu einem nächsten Knoten (302ₕ, 302ⱼ) entlang dem Pfad verfügbar ist, und
zum Bestimmen, daß der Pfad verfügbar ist, wenn die Datenübertragung (i->j) auf dem Pfad ungeschützt ist, ausgelegt sind,
der Zielknoten (302ⱼ) zum Bestimmen, daß der Pfad verfügbar ist und Zurücksenden einer positiven Bestätigung (ACK), wenn der Pfad verfügbar ist, ausgelegt ist, und zum Anhalten einer gegenwärtigen Datenübertragung (i->j) von ungeschützte Daten enthaltenden Datenpaketen auf dem Pfad, wenn bestimmt wird, daß der Pfad bzw. Kanal für neue Datenübertragung (g->h) verfügbar ist.

10. Ringnetz nach Anspruch 9, **gekennzeichnet dadurch, daß** der Ursprungsknoten (302ᵢ) zum Senden einer Pfadeinrichtungsnachricht (306) ausgelegt ist, die einen Pfad zum Einrichten einer Datenübertragung zum Zielknoten (302ⱼ) anzeigt.

11. Ringnetz nach Anspruch 10, **dadurch gekennzeichnet, daß** jeder Zwischenknoten auf dem Pfad zwischen dem Ursprungsknoten (302ᵢ) und dem Zielknoten (302ⱼ) zum Auslesen des Pfads aus der Pfadeinrichtungsnachricht (306) ausgelegt ist.

12. Ringnetz nach Anspruch 10 oder 11, **dadurch gekennzeichnet, daß** jeder Zwischenknoten auf dem Pfad zwischen dem Ursprungsknoten (302ᵢ) und dem Zielknoten (302ⱼ) zum Bestimmen einer Verfügbarkeit eines mit dem jeweiligen Zwischenknoten und einem nächsten Knoten auf dem in der Pfadeinrichtungsnachricht (306) angegebenen Pfad verbundenen Kanals ausgelegt ist.

13. Ringnetz nach Anspruch 12, weiterhin **dadurch gekennzeichnet, daß** jeder Zwischenknoten (302_{g}-302ₕ) zum Setzen eines Zustandes des mit dem jeweiligen Zwischenknoten verbundenen Kanals in der Pfadeinrichtungsnachricht ausgelegt ist.

14. Ringnetz nach einem der vorhergehenden Ansprüche 9-13, weiterhin **dadurch gekennzeichnet, daß** das verteilte Ringnetz λ-umwandlungsfähige optische Bauelemente implementiert.

## Revendications

1. Procédé de transmission de données dans un réseau en anneau de commutation par rafales comprenant une pluralité de noeuds (302_{g} - 302ₖ) et gestion distribuée
**caractérisé en ce que**
les données sont transmises par les noeuds (302_{g} - 302ₖ) en tant que rafales ou paquets de données contenant des données protégées pendant un temps réservé pendant lequel une bande passante a été réservée et paquets de données contenant des données non protégées après le temps réservé, un noeud source (302ᵢ) envoyant un message d'établissement de chemin (306) pour demander une transmission de données entre ledit noeud source (302ᵢ) et un noeud de destination (302ⱼ) par le biais de noeuds intermédiaires (302_{g}, 302ₕ) pour connecter le noeud source (302ᵢ) et le noeud de destination (302ⱼ),
la détermination par chaque noeud intermédiaire (302_{g}, 302ₕ) qu'une connexion à un noeud suivant (302ₕ, 302ⱼ) le long du chemin est disponible,
l'envoi en retour d'un accusé de réception positif (ACK) par le noeud de destination (302ⱼ) si le chemin est disponible et
la détermination que le chemin est disponible pour une nouvelle transmission de données (g → h) lorsqu'une transmission de données en cours (i → j) sur le chemin n'est pas protégée,
l'arrêt d'une transmission de données courante (i **→** j) de paquets de données contenant des données non protégées sur le chemin lorsqu'il est déterminé que le chemin ou canal, respectivement, est disponible pour une nouvelle transmission de données (g → h).

2. Procédé selon la revendication 1, **caractérisé, en outre,**
**par** l'étape d'envoi d'un message d'arrêt (314) par un noeud devenant un nouveau noeud source (302_{g}) à un noeud source (302ᵢ) envoyant des données non protégées.

3. Procédé selon la revendication 1 ou 2, **caractérisé, en outre, en ce que**,
si le chemin n'est pas disponible, le noeud intermédiaire (302_{g}, 302ₕ) envoie un message d'accusé de réception négatif (NACK, 308) au noeud source (302ᵢ), indiquant que la transmission de données ne peut pas être reçue.

4. Procédé selon la revendication 3, **caractérisé, en outre, en ce que**
le noeud source (302ᵢ) supprime le flux de données lorsque le noeud source (302ᵢ) reçoit un message d'accusé de réception négatif (NACK) (308).

5. Procédé selon l'une quelconque des revendications précédentes, **caractérisé, en outre, en ce que**,
lorsque le message d'établissement de chemin (306) arrive au noeud de destination (302ⱼ), le noeud de destination (302ⱼ) envoie au noeud source (302ᵢ) un message d'accusé de réception (ACK, 310) indiquant que le flux de données peut être transféré sur un chemin particulier.

6. Procédé selon l'une quelconque des revendications 1-5, **caractérisé, en outre, en ce que**
la transmission de données (i → j) est retentée au bout d'un certain temps (tₐₜₜₑₘₚ) sur un certain canal (λ).

7. Procédé selon l'une quelconque des revendications précédentes, **caractérisé, en outre, en ce que**,
lorsqu'un autre noeud source (302_{g}) souhaite envoyer une transmission de données au moins en partie par l'intermédiaire du même chemin (302_{g} à 302ₕ), l'autre noeud source (302_{g}) envoie un nouveau message d'établissement de chemin à son noeud de destination (302ₕ).

8. Procédé selon l'une quelconque des revendications précédentes, **caractérisé, en outre, en ce que**
le message d'établissement de chemin (312) inclut un champ de groupe de canaux et le noeud source (302ᵢ) entre dans le champ de groupe de canaux une liste de tous les canaux possibles à travers lesquels le noeud source (302ᵢ) envoie la transmission de données.

9. Réseau en anneau de commutation par rafales comprenant une pluralité de noeuds (302_{g} - 302ₖ) et gestion distribuée transmettant des données, comprenant
un ou plusieurs canaux (304) couplant les noeuds (302_{g} - 302ₖ) pour transmettre les données entre un noeud source (302ᵢ) et un noeud de destination (302ⱼ),
les noeuds (302_{g} - 302ₖ) étant étudiés pour envoyer des rafales ou paquets de données contenant des données protégées pendant un temps réservé pendant lequel une bande passante a été réservée et envoyer des paquets de données contenant des données non protégées après le temps réserve,
le noeud source (302ᵢ) étudié pour demander qu'une transmission de données soit établie vers le noeud de destination (302ⱼ) par le biais de noeuds intermédiaires (302_{g} - 302ₕ),
les noeuds (302_{g}, 302ₕ) étudiés pour déterminer qu'une connexion à un noeud suivant (302ₕ, 302ⱼ) le long du chemin est disponible et pour
déterminer que le chemin est disponible lorsque la transmission de données (i → j) sur le chemin n'est pas protégée,
le noeud de destination (302ⱼ) étudié pour déterminer que le chemin est disponible et envoyer en retour un accusé de réception positif (ACK) si le chemin est disponible et pour
stopper une transmission de données courante (i → j) de paquets de données contenant des données non protégées sur le chemin lorsqu'il est déterminé que le chemin ou canal, respectivement, est disponible pour une nouvelle transmission de données (g → h).

10. Réseau en anneau selon la revendication 9, **caractérisé en ce que**
le noeud source (302ᵢ) est étudié pour envoyer au noeud de destination (302ⱼ) un message d'établissement de chemin (306) indiquant un chemin pour établir une transmission de données.

11. Réseau en anneau selon la revendication 10, **caractérisé en ce que**
chaque noeud intermédiaire sur le chemin entre le noeud source (302ⱼ) et le noeud de destination (302ⱼ) est étudié pour lire le chemin d'après le message d'établissement de chemin (306).

12. Réseau en anneau selon la revendication 10 ou 11, **caractérisé en ce que**
chaque noeud intermédiaire sur le chemin entre le noeud source (302ⱼ) et le noeud de destination (302ⱼ) est étudié pour déterminer une disponibilité d'un canal connecté au noeud intermédiaire respectif et à un noeud suivant sur le chemin spécifié dans le message d'établissement de chemin (306).

13. Réseau en anneau selon la revendication 12, **caractérisé, en outre, en ce que**
chaque noeud intermédiaire (302_{g} - 302ₕ) est étudié pour définir un statut du canal connecté au noeud intermédiaire respectif dans le message d'établissement de chemin.

14. Réseau en anneau selon l'une quelconque des revendications précédentes 9-13, **caractérisé, en outre, en ce que**
le réseau en anneau distribué met en oeuvre des composants optiques capable d'une conversion λ.
